# EUROPEAN PATENT APPLICATION

(11) **EP 4 818 677 A1**
(43) Date of publication of application: **07.10.2026**
(21) Application number: 25168142.5
(22) Date of filing: 04.04.2025
(51) Int. Cl.: G01N 21/71

(54) **AN IMMERSIBLE DEVICE FOR ELEMENTAL COMPOSITION MEASUREMENTS OF MOLTEN METALS AND ALLOYS**

(71) Applicant: DTE ehf., 113 Reykjavík (IS)
(72) Inventor: Leósson, Kristján, 107 Reykjavík (IS); Arnardóttir, Iðunn, 220 Hafnarfjörður (IS); Óskarsson, Hersteinn, 104 Reykjavík (IS); Friðriksdóttir, Íris, 203 Kópavogur (IS)
(74) Representative: Arnason Faktor

(57) **Abstract**

The present invention provides an apparatus and a method for rapid, repeatable and accurate measurements of elemental composition of a body of molten metal or alloy using an immersive tube. The apparatus includes a gas-conduit, gas discharging system and one or more gas exit holes for controlling the flow of gas through the apparatus. The gas discharging system directs the flowing gas to a sampling point. When the tube is immersed in a body of molten metal or alloy such that the lower end of the tube and the one or more gas exit holes become arranged below the surface level of the body of molten metal or alloy, molten metal or alloy will flow into the tube through the lower end of the tube and form a sampling surface within the tube. By using an even flow rate of gas flow, the sampling surface will become positioned at a substantially fixed height within the tube at a level below the one or more gas exit holes. The gas discharging system will direct the flow of gas towards the sampling point to quickly create a well-defined and near-homogeneous chemical environment around the sampling point.

## Description

### FIELD OF INVENTION

The disclosure relates to the field of spectroscopy for measurements of elemental composition of molten material, or more specifically the disclosure pertains to an immersible measurement apparatus and method using Laser-Induced Breakdown Spectroscopy (LIBS).

### BACKGROUND

Laser-Induced Breakdown Spectroscopy, LIBS, is an atomic emission spectroscopy technique that uses high-energy laser pulses to excite a sample (an ablated sample), creating a plasma composed of matter in a highly excited energy state and detecting light emitted from the plasma during its subsequent relaxation, which includes spectrally narrow emission characteristic of the elements in the sample. One of the advantages of LIBS over other similar and perhaps more conventional techniques such as spark-OES is that LIBS provides a fast and versatile analytical method applicable to samples in the solid, liquid or gas phase. However, historically, in terms of quantitative analysis, LIBS techniques have had limited success and were generally considered to have inferior accuracy and repeatability compared to other similar elemental analytical techniques.

Specifically for application of the LIBS technique to molten metal analysis, both non-immersive and immersive measurement probes are known, each with its sets of advantages and disadvantages as outlined below.

WO2020239239A1 discloses a LIBS method where non-contact and non-immersive quantitative elemental measurements are carried out on a liquid metal or alloy sample, where the analysis unit is positioned in close proximity to the measured sample. WO2022117768 further discloses additional details relevant for this approach for ensuring improved measurement repeatability and accuracy.

The non-contact, close-proximity analysis method generally requires access to a free surface of the molten metal bath, or apparatus for extracting a sample of liquid metal from the body of liquid metal for feeding into the analyzer. This approach may not be suitable in all instances, for example due to space constraints or where it is desired to evaluate the composition of the molten metal at different depths in a body of molten metal.

An approach involving immersive housing is described in US6784429B2, which discloses a probe head for in-situ, real-time, qualitative and/or quantitative measurements of properties of molten metal or alloy. When immersed, a stable volume of inert gas is provided inside the housing to enable a passage of radiation towards the molten metal of alloy to generate a detectable species, while preventing said molten metal or alloy from entering the immersive probe and protecting spectroscopic equipment such as a laser excitation system that may be positioned inside the housing. In some embodiments disclosed in US6784429B2, the inert gas is continuously flowing through the volume of the housing. US6909505B2 discloses a similar approach where a tube is inserted into the body of molten metal, e.g. through the wall of a furnace, where a continuous flow of gas forms bubbles in the molten metal at the end of the tube, while laser radiation is used to probe the inside surface of the bubble for analyzing the material composition.

Both approaches have certain disadvantages. In proposing a geometry to keep molten metal out of the housing by using a stable volume of gas, US6784429B2 disregards the evaporation of material that occurs due to the action of the laser pulses that will contaminate the stable volume of gas inside the housing and affect measurement results. In allowing gas to flow through narrow channels in close vicinity to the forward end of the housing, the design proposed in US6784429B2 ignores the surface tension and potentially strong capillary effect of the molten metal which will require a certain pressure to overcome. This will cause the gas to bubble out of the wider bottom end of the housing rather than the narrow channels and result in an unstable sampling surface. In US6909505B2, the sampling surface will be similarly unstable due to gas bubbling out of the end of the immersed tube. To counter this, US6909505B2 proposes a vision system to assist in targeting the pulsed laser beam on the inside bubble surface. Furthermore, neither approach recognizes how sensitive LIBS analysis of molten metal is to the exact gas composition around the sampling point, especially for elements with high vapor pressure and/or strong tendency for oxidation. Both of these methods, as well as other similar approaches described in prior art, involve tubes or housings having a considerable internal volume that needs to be flushed out by the inert gas to provide a consistent atmosphere at the sampling point during a LIBS measurement. This limitation may be acceptable for probes that are designed to be immersed and subjected to continuous gas flow for a long time, but this has the added disadvantages of requiring substantial volumes of (typically inert) gas, as well as inducing additional oxidation on the surface of the melt external to the probe, as bubbles of gas (inert or not) escape from the melt to the free atmosphere, breaking up the melt surface and exposing additional molten metal or alloy to air. The metal oxides thus formed can subsequently be entrained in the melt, increasing the concentration of solid inclusions, detrimentally affecting melt quality.

### SUMMARY OF THE INVENTION

An object of the invention is to provide an apparatus/device, e.g., a LIBS probe, comprising an immersible tube and a method for rapid, repeatable and accurate measurements of elemental composition of molten metal or alloys.

Another object of the invention is that it may be used to measure elemental composition of a body of flowing/moving molten metal or alloy such as, but not limited to, a body of molten metal or alloy flowing along a trough, or a body of molten metal or alloy arranged in a furnace with a variable metal level, and/or subjected to (rigorous) stirring.

Another object of the invention is to provide a solution, wherein distance sensors configured to measure and control the distance (e.g., through the use of a robotic assembly and/or actuators) from the laser excitation system and/or emission receiving system to a sampling surface of the molten metal or alloy, are not needed to yield accurate and repeatable measurements.

Yet another object of the invention is to provide a solution for rapidly establishing the desired chemical environment around the sampling surface, or at least around a sampling point thereof, with minimal amount of contamination such as atmospheric contamination from within the tube. This allows the apparatus to rapidly provide the required conditions for accurate analysis, e.g., in situations where the apparatus needs to be retracted between measurements due to heat load from the molten metal and the surrounding environment.

The present invention is, therefore, highly useful for both metal and alloy manufacturing such as in aluminum plants, steel smelters and the like, and metal recycling industry, wherein accurate, safe and time-efficient measurements of elemental composition of metal or alloys in metal furnaces (or other containers/places where a significant quantity of molten metal or alloy is being produced, treated, transported or stored) is of considerable importance.

In an aspect of the present invention, an apparatus for measuring elemental composition of one or more elements in a body of molten metal or alloy is provided.

The apparatus includes a tube, wherein the tube comprises an open lower end, and, one or more gas exit holes arranged above the lower end, wherein the one or more gas exit holes are configured to allow a flow of gas to exit the tube.

The apparatus includes a gas discharging system arranged within the tube above the lower end, and a gas conduit arranged within the tube and connected to a gas inlet and the gas discharging system, configured to receive a flow of gas from the gas inlet and to transfer the flow of gas to the gas discharging system.

The apparatus includes an excitation system configured to emit one or more laser pulses to ablate a sample of the body of molten metal or alloy and an emission receiving system configured to receive emitted light from the ablated sample for determining one or more elements present in the molten metal or alloy.

The tube is configured so that at least said lower end of the tube is immersible in the body of molten metal or alloy such that the lower end of the tube and the one or more gas exit holes are arranged below the surface level of the body of molten metal or alloy and allowing the molten metal or alloy to flow into the tube through the lower end for forming a sampling surface within the tube below the one or more gas exit holes, and wherein the gas discharging system is configured to direct the flow of gas towards a sampling point of the sampling surface. Further, the configuration and arrangement of the tube and gas discharge means are advantageously such that upward flow of the molten metal or alloy, i.e. the level of the sampling surface, can be halted by the gas pressure inside the tube, at a level below the one or more gas exit holes, and preferably maintained at the a fixed level, relative to the gas exit holes and the excitation and emission receiving systems.

The apparatus (and method) of the present invention, advantageously, allows for rapid, accurate and repeatable elemental composition measurements of a body of molten metal or alloy. This may be achieved by the interplay of flow of gas through the conduit and to the gas-discharging system wherein the flow of gas is discharged (and dispersed) to the sampling point and the one or more gas exit holes which allow the gas, or a portion thereof, to exit the tube. The interplay is capable of substantially fixing the level of a sampling surface of the molten metal or alloy, formed within the immersed tube, irrespective of the depth of immersion, thus considerably eliminating the effects of regular and/or irregular motion of the external surface relative to the sampling surface (which may e.g., be induced by the immersion of the tube to variable depths into the body of molten metal or alloy, or by stirring, furnace charging, or other factors). Maintaining a continuous gas flow further limits the influence of natural and laser-induced evaporation of elements from the melt on the local environment. Additionally, by using a gas conduit with a small internal volume, proximity of the gas discharging system to the sampling point, and the rapid discharge of gas from the gas discharging system enables rapid formation of a stable and well-defined chemical environment around the sampling point on the sampling surface, prior to and during the measurement phase, which yields more accurate and repeatable elemental composition measurements.

Herein, the term "substantially" may refer to at least 80% of the quantity/value referring thereto, preferably at least 90% of the quantity/value referring thereto, even more preferably at least 95% of the quantity/value referring thereto.

In some embodiments, the gas discharging system is configured to direct and disperse the flow of gas towards the sampling point, wherein the gas discharging system may comprise a plurality of holes for dispersing the flow of gas.

The gas discharging system may have a torus-like shape configured such that the one or more laser pulses may pass through an open center of the torus shape. In such embodiments, the holes being preferably arranged between the inner surface and/or the bottom surface (i.e., the surfaces facing the open center and the molten metal, respectively) of the torus-like shape. Alternatively, or additionally, the gas discharging system may include at least one terminal discharging end, wherein each terminal discharging end comprises a plurality of holes, and wherein at least a portion of the plurality of holes are directed towards the sampling point.

The flow of gas, e.g., into the gas-conduit from the gas-inlet, may be controlled to maintain a substantially even flow rate of gas through the gas conduit, irrespective of pressure inside the gas tube. For this purpose, the apparatus may comprise a gas flow controller connected to the gas inlet and configured to control the flow of gas and to maintain a substantially and preferably essentially even flow of gas.

The gas-conduit preferably has a low volume such that when the flow of gas passes through the gas-conduit any contaminants arranged within the gas-conduit will be rapidly flushed out of the conduit.

In some embodiments, the gas conduit may be coiled. This may serve to lengthen the gas-conduit allowing the gas in the flow of gas to spend more time in the gas-conduit to pre-heat the gas in the flow of gas. In such embodiments, the source of heat for pre-heating the gas can be the body of molten metal or alloy. The gas-conduit may then be advantageously formed from thermally conductive material such as metal. Additionally, or alternatively, the apparatus may further comprise a heating element to pre-heat the gas in the flow of gas.

The orientation of the tube and the position of the one or more gas exit holes on the tube are configured such that when the tube is immersed in the body of molten metal or alloy, the one or more gas exit holes are in a substantially horizontal arrangement, i.e., parallel to the sampling surface. Thus, in some embodiments the tube may be configured to be in a vertical orientation when in use, with the exit holes arranged horizontally across the tube, whereas in other embodiments the tube may be configured to be oriented tilted at an angle, having the gas exit hole arranged tilted with respect to the tube, so that they lie horizontally when the tube is tilted at the desired angle.

One of the advantages of the present invention is that the distance from the sampling surface to the one or more gas exit holes can be maintained substantially fixed, when the tube is immersed in the body of molten metal or alloy and the gas flow through the apparatus is maintained at a substantially fixed value. In some embodiments, the flow of gas may be selected such that the distance from the sampling surface to the one or more exit holes is substantially in the range from about 1 mm to about 50 mm. In some embodiments the distance can be maintained in range from about 1 mm or from about 4 mm or from about 5 mm or from about 10 mm or from about 15 mm or from about 20 mm or from about 25 mm, to about 50 mm, or to about 40 mm or to about 30 mm, or to about 20 mm, or to about 10 mm. In some embodiments the distance is in the range from about 2 mm to about 10 mm or in the range from about 2 mm to about 20 mm, such as about 2 mm, about 4 mm, about 5 mm, about 10 mm, about 12 mm or about 15 mm. Advantageously, by fixing this distance, the distance from the sampling point to the laser excitation system and/or emission receiving system can be determined and controlled, without the use of distance sensors.

In some embodiments, the gas in the flow of gas may comprise a carrier gas component and a selectively reactive gas component to provide a well-defined interaction between the molten metal surface and the plasma plume on one hand and the local environment around the sampling point on the other. A carrier gas component may be a noble gas and the selectively reactive gas component may be oxygen, carbon dioxide or sulfur hexafluoride or combinations thereof, or other gas components selected to provide specific interactions with elements in the molten metal sample and/or the vapor phase above the molten metal surface.

The apparatus may further comprise a moving means configured to immerse the probe of the apparatus, in particular the tube thereof, in the body of molten metal or alloy and to retract/extract it from the body of molten metal or alloy, wherein the retraction/extraction is carried out after the measurement (i.e., after emitting one or more laser pulses and receiving the emitted radiation). In some embodiments, the moving means may comprise a robotic assembly, wherein the robotic assembly may comprise one or more arms and one or more actuators. In some embodiments, the probe of the apparatus, comprising the tube, may be mounted on the robotic assembly. The robotic assembly may be connected to a control unit configured to control the movement of the robotic assembly.

In another aspect of the present invention, a method for measuring quantitatively one or more elements in a body of molten metal or alloy is provided.

The method includes a step of transmitting a flow of gas from a gas-inlet, through a gas conduit, to a gas discharging system arranged within a tube, wherein the tube comprises an open lower end and one or more gas exit holes arranged above the lower end, and wherein the gas discharging system is arranged above the lower end of the tube.

The method includes a step of immersing the tube in the body of molten metal or alloy such that the lower end of the tube and the one or more gas exit holes are positioned below the surface level of the body of molten metal or alloy.

The method includes a step of allowing molten metal or alloy from the body of molten metal or alloy to rise within the tube forming a sampling surface below the one or more gas exit holes.

The method includes a step of maintaining a substantially even flow rate of gas from the gas-inlet, through the gas conduit, to the gas discharging system for directing the flowing gas to the sampling surface, and wherein a portion of the flow of gas will exit the tube through the one or more gas exit holes.

The method includes a step of emitting one or more laser pulses, by a laser excitation system, to ablate a sample of the molten metal or alloy sampling surface.

The method includes a step of detecting emitted light from the ablated sample for determining one or more elements present in the molten metal or alloy. In some embodiments, this step may be carried out by an emission receiving system and a spectrograph (which may also, in some embodiments, be considered to be a part of the emission receiving system).

In some embodiments, the step of directing the flowing gas to the sampling surface may further comprise a step of dispersing the flow of gas, wherein the flow of gas is both dispersed and directed to the sampling point.

In some embodiments, the flowing gas may comprise a selectively reactive gas component such as oxygen, carbon dioxide or sulfur hexafluoride or any combination thereof. In such embodiments, the flowing gas may further comprise a carrier gas component as described herein.

In some embodiments, the step of maintaining a substantially even flow rate of flow of gas substantially fixes the distance from the sampling point and the one or more gas exit holes.

In some embodiments, the method further comprises a step of arranging a laser excitation system and/or an emission receiving system at a fixed distance from the one or more gas exit holes, and by extension having a substantially fixed distance from the sampling point when the gas flow is maintained at a substantially constant value.

The method may further comprise a step of pre-heating the gas in the flow of gas, preferably while the gas flows through the gas conduit.

In some embodiments, the method may comprise a step of flushing the tube with gas such as inert gas or reactive gas mixture (as described herein) or a combination of both with an increased flow rate as compared to the flow rate selected for maintaining a fixed distance to the sampling surface as described above. Accordingly, in some embodiments, the gas used for flushing the tube may differ from the gas used for discharging through the gas discharging system. Such a step may be carried out while the tube is immersed, e.g., between successive measurements or immediately prior to a measurement. The higher flow rate is advantageously set in such a way that it generates enough internal pressure for the gas to be pushed out of the open lower end of the tube. When the flow rate is subsequently lowered, new molten metal or alloy will be introduced into the tube from the body of molten metal or alloy, providing a "fresh" sampling surface and furthermore ensuring that the measured sample is representative of the body of molten metal or alloy in the vicinity of the open lower end of the tube. The act of flushing may be carried out through the gas-conduit and gas-discharging system as described herein. Additionally, or alternatively, it may be carried out through the tube itself, wherein the gas may be introduced through a separate gas channel.

The method may further comprise a step of extracting/retracting the tube from the body of molten metal or alloy. An advantage of the present invention is that it may be used to obtain rapid and accurate elemental composition of a body of molten metal or alloy, wherein the tube is quickly immersed, a measurement is carried out, and the tube is subsequently extracted. Typically, this will be done in a repeated fashion for recording the elemental composition in the body of molten metal or alloy as a function of time. For this purpose, the immersible probe may be mounted on a robot arm, a moving slide, or other moving means, for immersing and extracting the probe. In some applications, the measurement time (from immersion to extraction) may be in the range of seconds to minutes, preferably in a range of half a minute to a minute, more preferably in a range of about 30 seconds, while the interval between measurements may be in the range of minutes or more.

The person skilled in the art will readily understand that embodiments, or combination of embodiments, of the method may be equally applicable to embodiments, or combination of embodiments, of the apparatus and vice versa. The two types of aspects are closely related, sharing similar procedural steps and structural/functional features. Accordingly, the features mentioned in embodiments of the method apply to the apparatus and vice versa and such embodiments with a combination of features taken from the particularly disclosed aspects of the method and system are encompassed by the invention and covered by this disclosure.

The skilled person will be able to adapt embodiments from one to another based on the disclosure, recognizing how the underlying technical features translate between procedural steps in the method and the structural or functional features of the apparatus. This flexibility ensures that the scope of the invention covers both aspects and all combinations of embodiments thereof.

### BRIEF DESCRIPTION OF FIGURES

The foregoing and other aspects, features and advantages of the invention will be apparent from the following more particular description of particular embodiments of the invention. The drawings are not necessarily to scale, emphasis instead being placed upon illustrating the principles of the invention.
- **Fig. 1**: shows a drawing of an immersible tube in accordance with an embodiment of the present invention.
- **Fig. 2**: shows a drawing of an immersible tube in accordance with another embodiment of the present invention.
- **Fig. 3**: shows a drawing of a measurement probe arranged diagonally and immersed in a body of molten metal or alloy, in accordance with an embodiment of the present invention.
- **Fig 4.**: shows a drawing of a measurement probe comprising a horizontal and a diagonal tube parts arranged and immersed in a body of molten metal or alloy, in accordance with an embodiment of the present invention.
- **Fig. 5**: illustrates schematically how an embodiment of the present invention may be applied to a body of flowing molten metal or alloy arranged in a trough.
- **Fig. 6**: shows a schematic flowchart illustration an embodiment of a method in accordance with the present invention.

### DETAILED DESCRIPTION

In the description below, it will be appreciated that variations to the embodiments of the invention can be made while still falling within the scope of the invention. The exemplary embodiments are merely intended to better illustrate the invention and should not indicate a limitation on the scope of the present invention. Features disclosed in the specification, unless stated otherwise, can be replaced by alternative features serving the same, equivalent, or similar purpose.

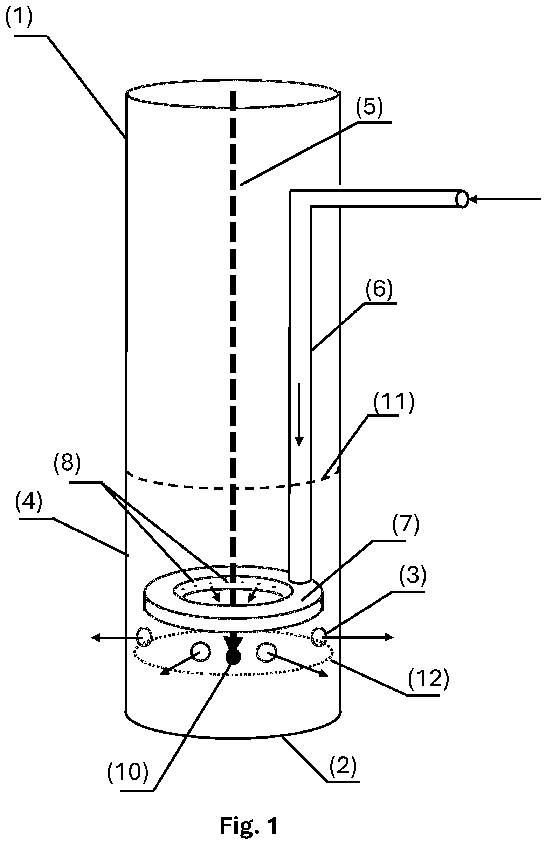

**Fig. 1** shows a drawing of a part of an apparatus, e.g., a measurement probe, including an immersible tube (1) with an open lower end (2). The tube (1) being cylindrical and having a one or more gas exit holes (3) arranged around the circumference of the cylinder in the immersible part of the tube (4).

The one or more gas exit holes may be arranged at points around a circumference of a tube, preferably in a ring or an ellipse around the circumference. In such embodiments, the one or more gas exit holes may be uniformly distributed along the circumference. As is obvious to the skilled person, the number of gas exit holes may vary depending on the diameter of the one or more gas exit holes and the diameter of the tube.

Not shown in the figure is a laser excitation system and an emission receiving system. The laser excitation system being configured to emit one or more laser pulses to ablate a sample, preferably a sample of molten metal or alloy, which will be partly converted to a plasma plume, in a manner known in the art. Accordingly, the tube (1) provides an optical path (5), along the longitudinal direction of the tube, for the one or more laser pulses directed towards the sample. For clarity, the optical path of the pulsed laser beam (may also be referred to as a laser excitation path) is depicted by a dashed line in **Fig. 1****.** The emission receiving system is configured to receive emitted light through a shared or separate optical path (i.e., in some embodiments the emission receiving system may be configured to have an optical path, an emission receiving path, that is different or partially different from the laser excitation path). The emission receiving system may include, or be connected to, a control unit configured to receive a signal from components of the emission receiving system characteristic of the received emitted light and spectrally resolve the signal to carry out elemental analysis.

The tube (1) may comprise one or more optical windows (not shown), the optical windows being configured to allow the passage of electromagnetic radiation into or out of the tube. As a non-limiting example, a tube may comprise a first window configured to allow the passage of one or more laser pulses, from a laser excitation system to a sampling point on a sampling surface and additionally, in some embodiments, a second window configured to allow the passage of emitted radiation, including ultraviolet radiation, from an ablated sample to an emission receiving system. It will be recognized by a person skilled in the art that the optical windows will be mounted on the tube in such a way as to be substantially gas-tight.

The laser excitation system may comprise a laser source to emit one or more laser pulses at a sampling point such as, but not limited to, excimers or pulsed Nd:YAG lasers or pulsed fibre-coupled lasers. It will be recognized by a person skilled in the art that the laser excitation system may also comprise more than one laser source having more than one optical axes. The laser may be directed from the laser source into the tube through a first optical window, along a laser excitation path (5) and to a sampling point on the sampling surface, wherein the molten metal or alloy positioned at the sampling point becomes ablated and excited when subject to the high energy laser pulses. The laser excitation system may further comprise one or more optical elements such as, but not limited to, lenses, mirrors, and/or wavelength-selective components, to direct and/or focus the emitted laser pulses. In some embodiments, the laser excitation system may be controlled by a control unit, e.g., for controlling the timing of emitting one or more laser pulses relative to the detection of subsequently emitted plasma radiation, the number of pulses and the timing in between pulses.

The emission receiving system (not shown) comprises one or more spectrally dispersive elements, such as a spectrograph, and one or more detectors configured for detecting emitted light from the ablated sample such as, but not limited to, photomultipliers or charge-coupled devices (CCDs). Analogous to the laser excitation system, the emission receiving system may further comprise one or more optical elements such as, but not limited to, spectral filters, beamsplitters, optical fibres, lenses, mirrors, and amplifiers.

The optical detection is preferentially synchronized and gated in relation to the pulsed laser excitation.

The apparatus further includes a gas conduit (6), arranged, at least in parts, within the tube (1). The gas-conduit being connected to a gas-inlet (not shown) and configured for receiving and transporting a flow of gas.

In some embodiments, the inner diameter of the tube may be in the range from 25 mm to 100 mm such as in the range from 30 mm to 90 mm, or in the range from 40 mm to 80 mm, or in the range 50 mm to 60 mm. Accordingly, the inner diameter of the tube may be 25 mm, or 30 mm, or 35 mm, or 40 mm, or 45 mm, or 50 mm, or 55 mm, or 60 mm, or 65 mm, or 70 mm, or 75 mm, or 80 mm, or 85 mm, or 90 mm, or 95 mm, or 100 mm

In some embodiments, the inner diameter of the gas conduit is in the range of 3 to 7 mm, preferably in the range of 4 to 6 mm. Accordingly, the inner diameter may be 3 mm, or 4 mm, or 5 mm, or 6 mm, or 7 mm. The resulting low volume of the gas-conduit allows for rapid flushing of any contaminants such as air from the gas-conduit, wherein the contaminants will be pushed out quickly by the flow of gas. As a non-limiting example, if the inner diameter is 4 mm in a 1-m long conduit connected to a specified gas source, the internal volume will be below 0.013 L. For a typical gas flow rate of 1L/min, the conduit will be flushed out in a matter of seconds.

In some embodiments, the gas conduit may have a different shape such as being in the form of a coil inside the tube (1). In some embodiments, the gas conduit may be curved.

The apparatus further includes a gas discharging system (7) connected to the gas-conduit and preferably arranged in the immersible part of the tube (4). The gas-conduit receives gas from the gas-inlet and transfers it to the gas discharging system, wherein the gas discharging system is configured to direct and discharge the flowing gas towards a point that aligns with the optical axis of the one or more laser pulses. For this purpose, the gas discharging system comprises at least one opening (8) for allowing gas to exit the discharging system and be directed towards the point (10). In the embodiment of Fig. 1, the gas discharging system is of torus shape with an open center of sufficient diameter such that the pulsed laser beam and the radiation collected by the emission receiving system can pass through the open center of the torus shape. The gas discharging system includes a plurality of openings (8) arranged on the inner radial surface directing the gas radially inwards and towards the point (10).

In some embodiments, the diameter of each hole of the plurality of holes in the gas discharging system may be the range of 0.5 to 3 mm, preferably in the range of 1 to 2 mm. Accordingly, in some embodiments, the diameter may be 0.5 mm, or 0.6 mm, or 0.7 mm, or 0.8 mm, or 0.9 mm, or 1.0 mm, or 1.1 mm, or 1.2 mm, or 1.3 mm, or 1.4 mm, or 1.5 mm, or 1.6 mm, or 1.7 mm, or 1.8 mm, or 1.9 mm, or 2.0 mm, or 2.1 mm, or 2.2 mm, or 2.3 mm, or 2.4 mm, or 2.5 mm, or 2.6 mm, or 2.7 mm, or 2.8 mm, or 2.9 mm, or 3.0 mm.

In some embodiments, the distance from the one or more gas exit holes, in the vertical direction along the tube, to the center of the gas discharging system may be in the range of 0 to 2 cm, preferably in the range of 0.5 to 1 cm. Accordingly, the distance from the one or more gas exit holes, in the vertical direction along the tube, to the gas discharging system may be 0 cm, or 0.2 cm, or 0.3 cm, or 0.4 cm, or 0.5 cm, or 0.6 cm, or 0.7 cm, or 0.8 cm, or 0.9 cm, or 1.0 cm, or 1.1 cm, or 1.2 cm, or 1.3 cm, or 1.4 cm, or 1.5 cm, or 1.6 cm, or 1.7 cm, or 1.8 cm, or 1.9 cm, or 2.0 cm. This distance is measured vertically upwardly, i.e. the holes are in these embodiments positioned at or below the height of the center of the gas discharging system.

For clarity the flow of gas through the apparatus is depicted by solid black arrows in the figures.

In some embodiments, the gas inlet may comprise or be connected to at least one gas flow controller, wherein the at least one gas flow controller is configured for controlling the flow rate of transmitted gas into the gas conduit. The total flow rate of the gas may be in the range 0.5-20 L/min. In another embodiment, the total flow rate of the gas may be in the range 1-10 L/min. In yet another embodiment, the total flow rate of the gas may be in the range 1-5 L/min. In one embodiment, a flow rate in the range 5-10 L/min can be used to briefly flush the tube prior to measurement, while a flow rate in the range 0.5-1.5 L/min may be used to maintain a stable sampling surface during measurements.

In some embodiments, the apparatus may comprise a control unit configured to communicate with and/or control one or more of the following: the gas flow controller, laser excitation system and emission receiving system, the spectrograph, the mechanical assembly. In such embodiments, the control unit may be configured to adjust the setting of the gas flow controller and the timing of the laser excitation system and the emission receiving system, in addition to controlling the mechanical positioning of the system.

When the apparatus, in particular the immersible part (4) of the immersible tube is immersed in a body of molten metal or alloy (not shown), the one or more gas-exit holes (3) become arranged below the surface level (11) of the body of molten metal or alloy. Molten metal or alloy, from the body of molten metal or alloy, will flow into the tube and the level of the molten metal or alloy within the tube will rise to a level along the tube situated below (along the longitudinal direction) the one or more gas exit holes to form a sampling surface (12) within the tube. The part of the sampling surface that coincides with the optical axis of the laser pulses will become the sampling point (10).

The flow of gas will flow from the gas-inlet, through the gas-conduit, to the gas discharging system and be directed and discharged towards the sampling point by the gas discharging system. The flow of gas is preferably kept substantially even during and after immersion. This will create an over-pressure (i.e., buildup of pressure) in the tube, wherein the gas thus exerts increasing force on the sampling surface effectively halting the upward motion of the molten metal or alloy along the tube. The gas will pass through the gas exits (3) and bubble into the body of molten metal or alloy.

In some embodiments, the diameter of the plurality of gas exit holes may be larger than 1 mm, preferably in the range 2-4 mm, allowing gas in the flow of gas to escape through the gas exit holes, e.g., by formation of one or more bubbles.

The flow of gas through the gas exit holes is made possible by overcoming the hydrostatic pressure in the body of molten metal or alloy at the depth of the gas exit holes. By keeping the gas flow rate substantially even, the distance between the sampling surface and the one or more gas exit holes will be defined by the additional pressure differential caused by the flow of gas exiting the tube through the one or more gas exit holes, which is related to surface tension or capillary effects, but will not significantly depend on the immersion depth of the tube.

The position of the sampling surface will therefore be substantially stable and fixed in relation to the geometry of the tube, irrespective of outside factors such as the immersion depth into the body of molten metal or alloy. Furthermore, the conditions established by, in particular, the size and number of gas exit holes, serves to quench regular and irregular motion of the sampling surface, e.g., ripples within the tube, to provide a stable sampling surface. By fixing the surface level height of the sampling surface, it is possible to know the distance of the sampling surface, in particular the sampling point, to the laser excitation system and/or emission receiving system without using distance sensors. Accordingly, an advantage of the present invention is achieved by keeping the sampling surface at a substantially fixed distance from the laser excitation system (and/or the emission receiving system), and hence the need for distance sensing to monitor the distance from the laser excitation system to the sampling surface, prior to emitting one or more lasers pulses, can be entirely avoided, while simultaneously suppressing variations in the laser excitation and the detection of emitted plasma radiation due to movement of the sampling surface.

In some embodiments, the gas exit holes (3) may be connected to gas exit channels (not shown) which lead the bubbling of gas away from the outer surface of the tube which is in contact with the body of molten metal or alloy. This may serve to prevent bubbling in the body of molten metal or alloy in proximity to the tube. In some embodiments, the gas exit channels may provide a path for the gas escaping the tube through the one or more gas exit holes to a point outside the body of molten metal or alloy, for example to a point positioned above the surface level of the molten metal or alloy. Alternatively, in some embodiments, the gas exit channels may simply extend horizontally out from the gas exit holes, perpendicularly to the longitudinal axis of the tube, to bring the gas away from the tube prior to bubbling it into the body of molten metal or alloy.

The gas discharging system will allow for rapid and homogeneous discharge of the flow of gas to the sampling point (10) to rapidly establish controllable, well-defined and near-homogeneous chemical conditions around the sampling point (10). The skilled person will appreciate that other embodiments may be used for the gas discharging system as long as they have the function of establishing controllable, well-defined and near-homogenous chemical conditions around the sampling point.

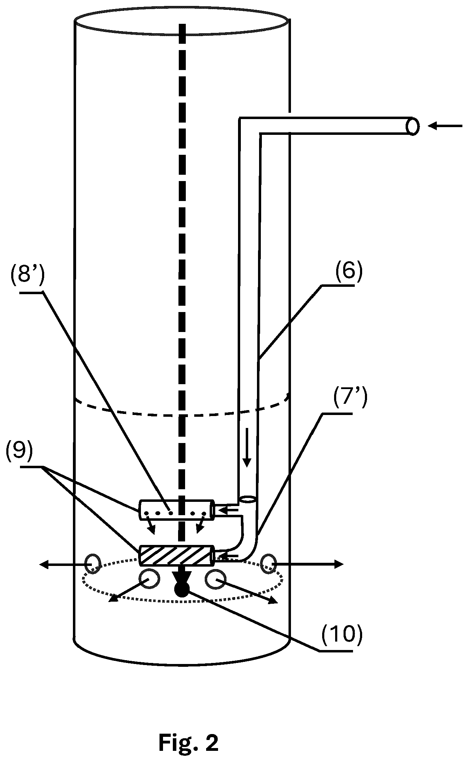

For example, referring to Fig. 2 which shows another embodiment of an apparatus comprising a different embodiment for the gas discharging system. In this embodiment, the gas discharging system (7') includes two terminal discharging ends (9) each comprising a plurality of openings (8'). In this embodiment, the two terminal discharging ends being cylindrical with a plurality of openings being arranged on the surface facing the optical axis and directing and discharging the flow of gas to the sampling point (10), when immersed. The gas discharging system connecting to the gas conduit at an interface and bifurcating into the two terminal discharging ends, allowing the flow of gas to be evenly divided into the terminal discharging ends. The skilled person will understand that shape of the terminal discharging ends may vary as well as the number of terminal discharging ends. As a non-limiting example, in some embodiments, the number of terminal discharging ends may be 1, 3, 4, 5, or even 6, and the terminal discharging ends may be arranged, e.g., horizontally or vertically.

The present invention may advantageously be applicable to a body of molten metal arranged in any type of vessel capable of carrying the body of molten metal or alloy such as, but not limited to, furnaces, troughs, crucibles and the like and regardless of whether the body of molten metal or alloy is stationary or flowing. In some embodiments, the tube may be immersed in a (substantially) vertical manner. While, in other embodiments, the tube may be immersed at an angle in the vessel. The alignment of the tube may often be dependent on the type, size, and shape of the vessel carrying the body of molten metal or alloy.

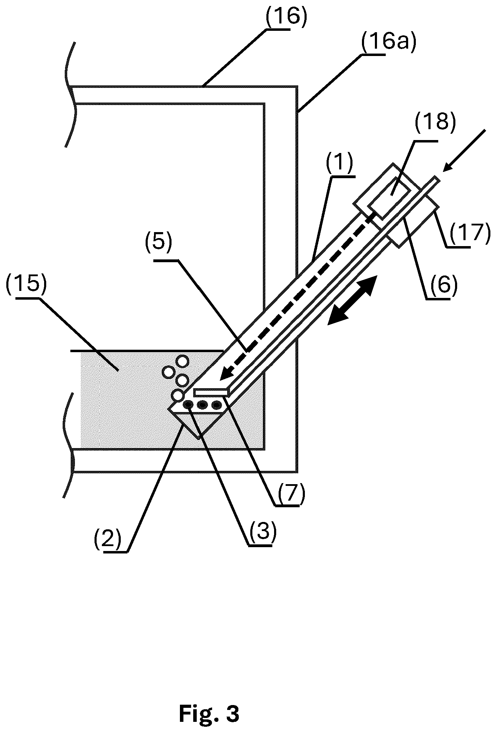

As a non-limiting example, **Fig. 3** shows a drawing of a measurement probe comprising an immersible tube (1) arranged diagonally and immersed in a body of molten metal or alloy (15) in a metal furnace (16) configured to receive a measurement probe, or at least an immersible tube thereof, e.g., by including a closable hatch. In this particular embodiment, the immersible tube is received through a sidewall (16a) of the furnace with the possibility of dynamically inserting and retracting the tube by mechanical means.

The probe of this embodiment is similar to the vertically arranged embodiments depicted in Figs. 1 and 2 with the exception that the gas-conduit enters into the tube through a head portion (17) connected to the tube (1). The head portion (17) is applicable to other embodiments as well and is a convenient component to hold and protect the laser excitation system (18).

Different geometries, sizes and shapes of the probe, and in particular for the tube of the probe, are to be considered encompassed within the present invention as long as they have the desired function as discussed above. For an example, the tube may comprise connected segments. In cases where the tube is not straight, the laser excitation system and the emission receiving system will include suitable components (e.g., mirrors and/or lenses) for directing optical radiation to/from the sampling point.

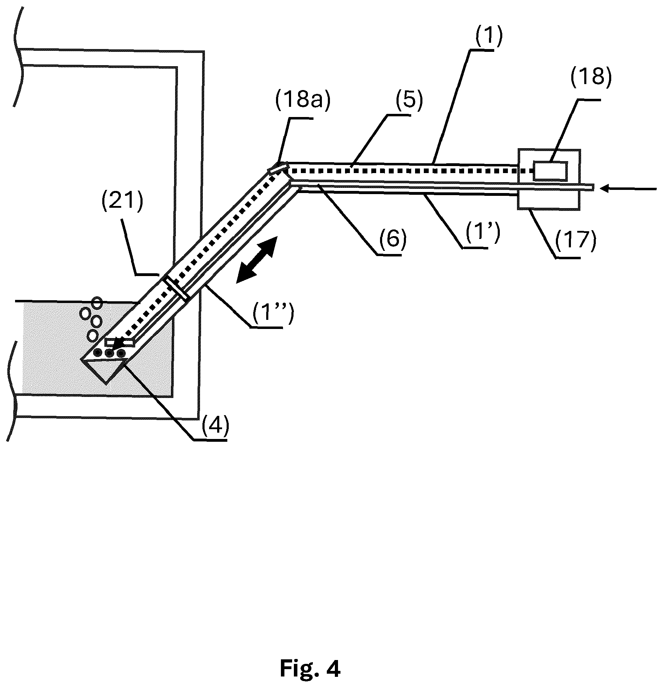

**Fig. 4** shows one such embodiment, which similar to the one depicted in Fig. 3, but wherein the tube (1) includes a horizontal segment (1') and a diagonal segment (1"), wherein the diagonal segment is arranged at an angle to the horizontal segment such that it can suitably be received through an opening on a furnace and immersed in a body of molten metal or alloy. In this embodiment, the laser excitation and emission receiving system (18) further comprises one or more optical mirrors (18a) for diverting the horizontal optical path of the one or more laser pulses through the horizontal segment (1') to a diagonal optical path through the diagonal segment (1") and diverting the plasma emission back to the emission receiving system.

The skilled person will understand that if the distance between the sampling point and the laser excitation system (the laser thereof) and the emission receiving system (the detector thereof) is large, e.g., as depicted in Fig. 4, the apparatus may have to be fitted with real-time adaptive beam steering and/or collection optics, also compensating for physical changes in the beam path, such as may be caused by thermal expansion, temperature-induced changes in refractive index, and varying mechanical load. Other components of the excitation and/or emission receiving systems (not shown), such as lenses, mirrors, or filters, may be placed at other positions along the tube. This may include a window (21), which is transparent to the excitation and emission wavelengths, that serves to limit the volume of the bottom part of the tube to further stabilize the sampling surface.

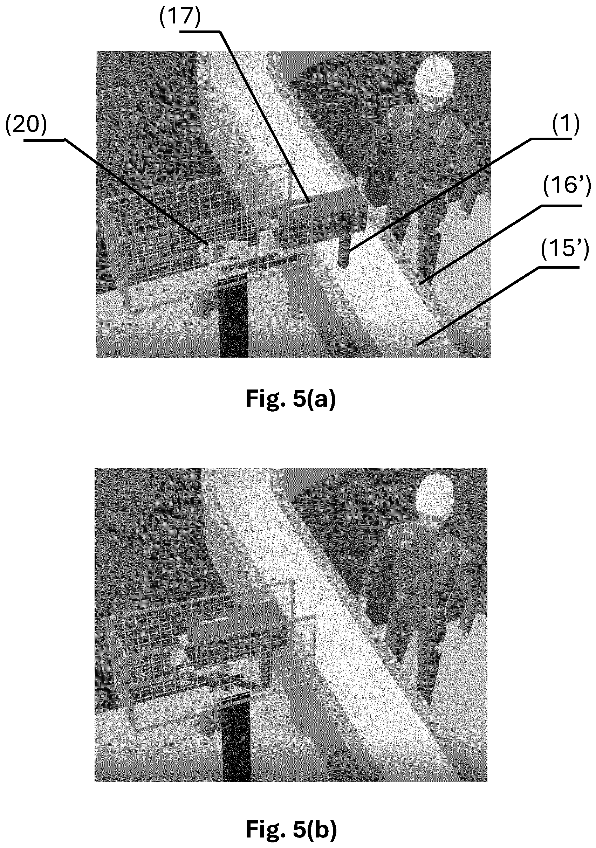

**Fig. 5** schematically illustrates how some embodiments of the present invention may be applied to a body of flowing molten metal or alloy (15') arranged in a trough (16'). An apparatus in accordance with any of the foregoing aspects or embodiments may comprise an automatic moving means such as a robotic assembly (20) for controlled movement of the measurement probe. In some embodiments, the robotic assembly may comprise a combination of robotic arm(s) and/or linear actuator(s). The robotic assembly may be connected to and controlled by a control unit. The robotic assembly may be configured to, or instructed by a control unit, to automatically immerse the tube (1) in a body of molten metal or alloy (15') as depicted in Fig. 5(a). Furthermore, the robotic assembly may be configured to, or instructed by a control unit, to extract the measurement probe, in particular the immersible tube, from the body of molten metal or alloy once at least one elemental composition measurement has been carried out. The robotic assembly may further bring the measurement probe into a resting state as depicted in Fig. 5(b).

An advantage of the present invention is that it enables accurate, repeatable and rapid quantitative elemental composition measurements of molten metal or alloy even when the process of immersion, measurement and extraction is periodically repeated.

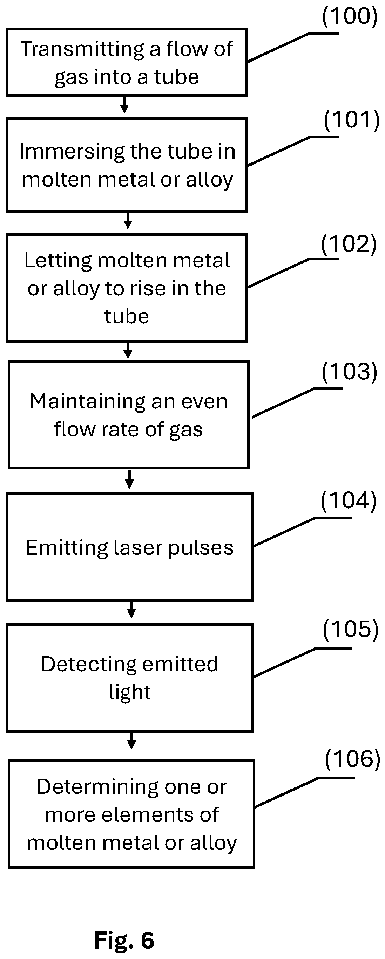

**Fig. 6** schematically shows an embodiment of a method for measuring the elemental composition of a body of molten metal or alloy.

A flow of gas is transmitted into a tube (100). The gas may be transmitted to a gas-inlet, connected to a gas-conduit arranged within the tube, wherein the gas flows inside the gas-conduit to a connected gas discharging system arranged within the tube. The gas discharging system including a plurality of holes allowing the flow of gas to exit the gas discharging system.

The tube is immersed in a body of molten metal or alloy (101). This step may also include a step of arranging the tube. The step of immersing (and arranging) the tube may be carried out by an automatic moving means such as by a robotic assembly, which may be controlled by a control unit. In some embodiments, the robotic assembly may comprise actuators and robotic arms.

Once the tube has been immersed in a body of molten metal or alloy. Molten metal or alloy will flow into the tube and begin to rise within the tube, forming a sampling surface within the tube (102).

An even flow rate of gas is maintained through the gas-conduit and to the gas-discharging system from which the flow of gas is directed towards a sampling point (103). Pressure will build up within the tube, with the flowing gas exiting the tube through one or more gas exit holes, counter-effecting the build up of hydrostatic pressure with increasing immersion depth. This will serve to keep the sampling surface, and hence the sampling point, at a substantially fixed level within the tube, while simultaneously suppressing the internal motion of the sampling surface.

One or more laser pulses are directed and emitted, by a laser excitation system, at the sampling point on the sampling surface (104). This will serve to ablate the molten metal or alloy at the sampling point and heat a part of the ablated sample to form a plasma. As the excited sample expands and relaxes, electromagnetic radiation (light) is emitted from the plasma plume.

Subsequently, the emitted light is received and spectrally resolved (106) to determine the elemental composition of the one or more elements in the molten metal or alloy.

In the foregoing apparatus and method aspects and embodiments of the invention, the gas in the flow of gas may be a mixture of gases, wherein the mixture of gases may comprise two or more components. One component may be a carrier component such as, but not limited to, substantially inert gas. One component may be a reactive gas component. The one or more substantially inert carrier gas components may be selected from the group of noble gases. In one embodiment, the one or more substantially inert carrier gas components comprise helium, neon, argon or mixtures thereof. In one embodiment, the one or more carrier gas components comprises argon. The selection of substantially inert carrier gas component(s) is typically based on obtaining suitable properties of the gaseous species or mixture thereof such as, but not limited to, reactivity, atomic/molecular weight, energy level structure, diffusivity, thermal conductivity. The one or more selectively reactive gas components may be chosen based on chemical properties that allow the one or more selectively reactive gas components to suppress oxidation of and/or selectively react with one or more elements being measured. The one or more selectively reactive gas component may be carbon dioxide, sulphur hexafluoride and oxygen.

The foregoing apparatus and method aspects and embodiments of the invention are not limited to analysis of particular elements. The measurement apparatus and method may be used to analyse both volatile and non-volatile elements. In some embodiments the method and/or apparatus is for determining in the liquid metal or alloy sample the concentration of one or more elements selected from, but not limited to, Aluminium, Silicon, Phosphorus, Sulphur, Chlorine, Calcium, Magnesium, Sodium, Titanium, Vanadium, Chromium, Manganese, Iron, Cobalt, Nickel, Copper, Zinc, Zirconium, Niobium, Molybdenum, Ruthenium, Rhodium, Palladium, Silver, Cadmium, Tin, Antimony, Wolfram, Rhenium, Iridium, Platinum, Gold, Mercury, Lead, Bismuth, Lithium, Beryllium and Boron.

The foregoing apparatus and method aspects and embodiments of the invention are not limited to analysis of a particular temperature. In some embodiments, the body of molten metal or alloy may be above 400°C, or above 500°C, or above 600°C, or above 700°C, or above 800°C, or above 1000°C, or above 1200°C, or above 1300°C. For certain metals and alloys an even higher temperature may be needed to maintain the body of molten metal or alloy in a molten state such as, but not limited to, above 850°C, or above 900°C, or above 1000°C, or above 1100 °C, or above 1200°C, or above 1300°C.

As used herein, including in the claims, singular forms of terms are to be construed as also including the plural form and vice versa, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to" and are not intended to exclude other components.

The present invention also covers the exact terms, features, values, and ranges etc. are used in conjunction with terms such as about, around, generally, substantially, essentially, at least etc. (i.e., "about 3" shall also cover exactly 3 or "substantially constant" shall also cover exactly constant).

The term "at least one" should be understood as meaning "one or more" and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention. Features disclosed in the specification, unless stated otherwise, can be replaced by alternative features serving the same, equivalent, or similar purpose. Thus, unless stated otherwise, each feature disclosed represents one example of a generic series of equivalent or similar features.

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously unless the context clearly indicates otherwise.

All of the features and/or steps disclosed in the specification can be combined in any combination, except for combinations where at least some of the features and/or steps are mutually exclusive. Preferred features of the invention are applicable to all aspects of the invention and may be used in any combination.

## Claims

1. An apparatus for measuring elemental composition of one or more elements in a body of molten metal or alloy, comprising:
a. a tube, comprising:
i. an open lower end, and,
ii. one or more gas exit holes arranged above the lower end, wherein the one or more gas exit holes are configured to allow a flow of gas to exit the tube,
b. a gas discharging system arranged within the tube above the lower end;
c. a gas conduit arranged within the tube and connected to a gas inlet and the gas discharging system configured to receive a flow of gas from the gas inlet and to transfer the flow of gas to the gas discharging system;
d. a laser excitation system configured to emit one or more laser pulses to ablate a sample of the body of molten metal or alloy;
e. an emission receiving system configured to receive and spectrally resolve emitted light from the ablated sample for determining one or more elements present in the molten metal or alloy, and,
wherein the tube is configured so that at least said lower end of the tube is immersible in the body of molten metal or alloy such that the lower end of the tube and the one or more gas exit holes are arranged below the surface level of the body of molten metal or alloy and allowing the molten metal or alloy to flow into the tube through the lower end for forming a sampling surface within the tube below the one or more gas exit holes, and wherein the gas discharging system is configured to direct the flow of gas towards a sampling point, and such that upward movement of the sampling surface can be halted by gas pressure inside the tube, to a level below the one or more gas exit holes and the gas discharging system.

2. The apparatus according to the preceding claim, wherein the gas discharging system is configured to direct and disperse the flow of gas towards the sampling point, and wherein the gas discharging system comprises a plurality of holes for dispersing the flow of gas.

3. The apparatus according to any of the preceding claims, wherein the gas discharging system is of torus-like shape configured such that the one or more laser pulses may pass through an open center of the torus shape.

4. The apparatus according to any of the preceding claims, wherein the gas discharging system comprises at least one terminal discharging end, wherein each terminal discharging end comprises a plurality of holes, and wherein at least a portion of the plurality of holes are directed towards the sampling point.

5. The apparatus according to any of the preceding claims, wherein the apparatus comprises a gas flow controller connected to the gas inlet and configured to control the flow of gas.

6. The apparatus according to any of the preceding claims, wherein the flow of gas is controlled to maintain a substantially even flow rate of gas through the gas conduit, irrespective of pressure inside the gas tube.

7. The apparatus according to any of the preceding claims, wherein tube is oriented and the one or more gas exit holes are configured on the tube such that when the tube is immersed, the one or more gas exit holes are in a substantially horizontal arrangement, i.e., parallel to the sampling surface.

8. The apparatus according to the preceding claim, wherein the flow of gas is selected such that the distance from the sampling surface to the one or more exit holes is substantially in the range from about 1 mm to about 50 mm, preferably in the range from about 1 mm to about 10 mm.

9. The apparatus according to any of the preceding claims, wherein the gas conduit is coiled.

10. The apparatus according to any of the preceding claims, wherein the gas in the flow of gas comprises a reactive gas component such as oxygen, carbon dioxide or sulfur hexafluoride.

11. The apparatus according to any of the preceding claims, wherein the apparatus further comprises a moving means configured to immerse the tube in the body of molten metal or alloy and to retract the tube from the body of molten metal or alloy.

12. A method for measuring quantitatively one or more elements in a body of molten metal or alloy, comprising:
a. transmitting a flow of gas from a gas-inlet, through a gas conduit, to a gas discharging system arranged within a tube,
wherein the tube comprises an open lower end and one or more gas exit holes arranged above the lower end,
and wherein the gas discharging system is arranged above the lower end;
b. immersing the tube in the body of molten metal or alloy such that the lower end of the tube and the one or more gas exit holes are positioned below the surface level of the body of molten metal or alloy;
c. allowing molten metal or alloy from the body of molten metal or alloy to rise within the tube forming a sampling surface below the one or more gas exit holes;
d. maintaining a substantially even flow rate of gas from the gas-inlet, through the gas conduit, to the gas discharging system for directing flow of gas to a sampling point on the sampling surface, and wherein a portion of the flow of gas will exit the tube through the one or more gas exit holes;
e. emitting one or more laser pulses, by a laser excitation system, to ablate a sample of the molten metal or alloy sampling surface; and,
f. detecting, by an emission receiving system, and spectrally resolving emitted light from the ablated sample for determining one or more elements present in the molten metal or alloy.

13. The method according to claim 12, wherein the step of directing the flowing gas to the sampling point further comprises a step of dispersing the flowing gas.

14. The method according to any one of claims 12 and 13, wherein the flow of gas comprises a reactive gas component such as oxygen, carbon dioxide or sulfur hexafluoride.

15. The method according to any of claims 12 to 14, wherein the method further comprises a step of pre-heating the gas in the flow of gas, preferably while the gas flows through the gas conduit.

16. The method according to any of claims 12 to 15, wherein the method further comprises a step of flushing the tube with a gas at an increased flow rate while the tube is immersed in the body of molten metal or alloy.
